# FASCICULE DE BREVET EUROPEEN

(11) **EP 1 624 946 B1**
(45) Date de publication et mention de la délivrance du brevet: **10.10.2007**
(21) Numéro de dépôt: 04742603.6
(22) Date de dépôt: 29.04.2004
(51) Int. Cl.: B01D 15/00, C08G 73/00, C07B 63/00

(54) **POLYIMINE RETICULEE ET SON UTILISATION POUR IMMOBILISER DES COMPOSES ACIDES OU ELECTROPHILES PRESENTS DANS UNE SOLUTION**
VERNETZTES POLYIMIN UND DESSEN VERWENDUNG FÜR DIE IMMOBILISIERUNG VON SAUREN ODER ELEKTROPHILEN VERBINDUNGEN IN EINER LÖSUNG
CROSS-LINKED POLYIMINE AND USE THEREOF FOR THE IMMOBILIZATION OF ACIDIC OR ELECTROPHILIC COMPOUNDS PRESENT IN A SOLUTION

(30) Priorité: 21.05.2003 FR 0306102
(43) Date de publication de la demande: 15.02.2006
(73) Titulaire: CENTRE NATIONAL DE LA RECHERCHE SCIENTIFIQUE (CNRS), 75016 Paris (FR); Université de Montpellier I, 34006 Montpellier Cedex 1 (FR)
(72) Inventeur: STIEN, Didier, 97300 Cayenne (FR)
(74) Mandataire: Sueur, Yvette
(86) Numéro de dépôt international: PCT/FR2004/001037
(87) Numéro de publication internationale: WO 2004/103516

(56) Documents cités:
- DE-A- 10 143 171
- US-A- 5 162 404
- YOSHIDA HIROYUKI ET AL: "Adsorption of strong acid on polyaminated highly porous chitosan: equilibria" IND ENG CHEM RES;INDUSTRIAL & ENGINEERING CHEMISTRY RESEARCH APR 1994, vol. 33, no. 4, avril 1994 (1994-04), pages 854-859, XP002266337 cité dans la demande
- DATABASE WPI Section Ch, Week 198744 Derwent Publications Ltd., London, GB; Class A26, AN 1987-309423 XP002266338 & JP 62 216641 A (NIPPON SHOKUBAI KAGAKU KOGYO CO LTD) 24 septembre 1987 (1987-09-24) cité dans la demande

## Description

L'invention concerne un matériau polymère utilisable pour piéger des sous-produits et des réactifs excédentaires dans un milieu réactionnel.

Lors de la mise en oeuvre d'une réaction chimique pour préparer un produit souhaité, on obtient souvent des sous-produits indésirables qu'il est nécessaire d'éliminer. En outre, le milieu réactionnel peut contenir des réactifs en excès qu'il faut également éliminer. Il a été envisagé d'utiliser des polymères sur lesquels les composés indésirables peuvent se fixer.

Il a été proposé d'utiliser des polyimines immobilisées sur un support pour l'élimination de composés acides dans un solvant organique. Par exemple, DE 101 43 171 décrit un procédé de préparation d'un matériau pour l'élimination des acides dans un liquide organique aprotique, ledit matériau étant constitué par une polyalkylèneimine fixée sur un support, par exemple de la silice. Yoshida Hiroyuki (Ind. Eng. Chem. Res. ; vol. 33, n° 4, avril 1994, pp. 854-859) décrit l'adsorption d'un acide fort sur un échangeur faiblement basique, constitué par une polyéthylèneimine fixée sur un chitosan fortement poreux. JP 62 216641 décrit une polyéthylèneimine ayant un poids moléculaire supérieur à 5000, adsorbée sur un support (par exemple une résine poreuse), et son utilisation comme adsorbant pour des acides forts, des tensioactifs ou des métaux lourds. La polyimine est adsorbée sur la résine poreuse par immersion de la résine dans une solution de polyimine. Il s'agit donc d'une polyimine soluble dans les solvants organiques, immobilisée sur un support. US-5,162,404 document décrit une éponge constituée par de la cellulose et une polyéthylèneimine "immobilisée" fixée sur la cellulose. La polyéthylèneimine est un polymère ramifié soluble dans l'eau qui comprend des groupes amine primaire, secondaire ou tertiaire séparés par des groupes -CH₂CH₂-, et rendue insoluble par réticulation à l'aide d'un acide carboxylique halogéné ou non, ou d'un composé aliphatique polyhalogéné à bas poids moléculaire réagissant avec les atomes N des groupes amine. Dans tous ces procédés, l'immobilisation de la polyimine sur un support présente cependant quelques inconvénients. D'une part, la préparation du support d'immobilisation nécessite deux étapes (préparation de la polyimine, puis fixation de la polyimine sur le support) ce qui augmente le coût de production. D'autre part, pour une quantité de support donnée, le nombre de fonctions utiles est nettement inférieur lorsque la polyimine est fixée sur un support.

Il a été proposé d'utiliser un polymère insoluble comme agent d'immobilisation d'un composé en solution. Les polymères classiquement utilisés sont des poly(styrène-divinylbenzène) portant des fonctions réactives permettant la fixation des composés à éliminer (Cf. WO 97/42230 et J. Chem. Soc., Perkin Trans. 1, 2000, p. 4133-4195). Cependant, les polymères de ce type ne peuvent être utilisés dans les milieux aqueux ou dans le méthanol. En outre, ils ont un taux de fonctions actives relativement faible, ce qui limite leurs performances.

Le but de la présente invention est de fournir un procédé pour éliminer efficacement des composés indésirables acides ou électrophiles dans l'eau et les solvants organiques généralement utilisés pour la synthèse de composés organiques, à l'aide d'un agent d'immobilisation insoluble.

L'invention a pour objet des polyimines réticulées et un procédé pour immobiliser des composés acides ou électrophiles présents dans un solvant. Ledit procédé est caractérisé en ce qu'il consiste à mettre en contact avec lesdits composés une polyimine réticulée dans laquelle les groupes imino sont des groupes -NH-, ladite polyimine réticulée étant insoluble dans ledit solvant, puis à séparer par filtration la polyimine modifiée obtenue.

La mise en contact peut être effectuée avantageusement à la température ambiante. La durée du contact varie suivant la nature des composés. De manière générale, une durée entre 1 heure et environ 10 heures est suffisante.

Une polyimine réticulée selon l'invention comprend des segments linéaires constitués par des unités -HN--R¹-NH-R²-Ar-R³- dans lesquelles R¹, R² et R³ sont des groupes alkylène ou alkénylène identiques ou différents et Ar représente un groupe aromatique.

R¹, R² et R³ sont de préférence des groupes alkylène ou alkénylène ayant de 1 à 10 atomes de carbone. Le groupe aromatique Ar est de préférence un groupe ϕ ou ϕ-ϕ dans lesquels ϕ représente un phényle portant éventuellement un ou plusieurs substituants. Le substituants du groupe phényle peuvent être choisis parmi les groupes alkyle, aryle, alkyloxy, alcoxycarbonyle, halogène, ou NO₂.

La présence de groupes phényle dans les unités récurrentes confère au polyimine des propriétés amphiphiles, qui permettent son utilisation aussi bien dans les milieux hydrophobes que dans les milieux hydrophiles.

Dans une polyimine utilisée pour le procédé de la présente invention, les noeuds de réticulation peuvent être par exemple du type C(R⁴NH-R²-Ar-R³-)₄₋ₙ(R⁴NH₂)ₙ ou N(R⁴NH-R²-Ar-R³-)₃ dans lesquels R⁴ représente un groupe alkylène ayant de préférence de 1 à 10 atomes de carbone et n est 0 ou 1.

Une polyimine telle que définie ci-dessus a une charge en groupes NH très élevée. Par exemple, elle est de l'ordre de 11 mmol/g lorsque R¹ et R⁴ sont -CH₂CH₂-, et R² et R³ sont -CH₂-. En outre, bien qu'insoluble dans l'eau et dans les solvants organiques utilisés habituellement pour diverses réactions chimiques, elle gonfle lorsqu'elle est placée dans de tels solvants, c'est-à-dire qu'elle a une capacité à accepter des molécules de solvant et de réactif au sein de la maille moléculaire. Les sites NH actifs de la polyimine sont donc accessibles et peuvent réagir avec différents composés, notamment avec des acides minéraux ou organiques et avec des composés électrophiles. Cette propriété est mise à profit pour piéger des composés de cette nature qui sont présents dans un milieu réactionnel et qui sont indésirables. La forte teneur en groupe NH est confirmée par le spectre IR de la polyimine, qui présente une très large bande vers 3300-3400 cm⁻¹, caractéristique des groupes NH.

Les polyimines réticulées utilisables dans le procédé de l'invention peuvent être préparées par un procédé en une étape consistant à polycondenser une diamine H₂N-R¹-NH₂ avec un dihalogénure X-R²-Ar-R³-X dans un solvant organique, en présence d'un agent de réticulation et d'un agent capable de piéger l'acide halohydrique formé. R¹, R², R³ et Ar sont tels que définis ci-dessus.

Il est préférable d'utiliser une diamine et un agent de réticulation qui ont une réactivité équivalente vis-à-vis du dihalogénure, pour obtenir une répartition statistique des noeuds de réticulation. Dans ce but, il est avantageux de choisir une tétramine N(R⁴NH₂)₃ ou C(R⁴NH₂)₄. Le rapport molaire agent de réticulation/diamine est de préférence inférieur ou égal à 4 % en mole. Dans ces conditions, le polymère obtenu reste complètement insoluble dans les solvants (eau ou solvants organiques), mais il gonfle bien dans lesdits solvants (à l'exception des alcanes).

Parmi les dihalogénures, on préfère les dichlorures.

Le solvant organique utilisé pour préparer une polyimine est choisi de préférence parmi ceux qui permettent de dissoudre les monomères et faire gonfler le polymère en croissance. A titre d'exemple, on peut citer le toluène et le DMF.

Comme agent capable de piéger l'acide halohydrique, on peut citer les amines tertiaires, par exemple la triéthylamine ou la diisopropyléthylamine.

Le procédé de l'invention peut être mis en oeuvre pour le piégeage et l'élimination d'acides minéraux, d'acides organiques ou de divers composés électrophiles qui se forment comme sous-produits lors d'une réaction, ou qui sont des réactifs utilisés en excès dans un mélange réactionnel.

Le piégeage d'un acide HX minéral (X est par exemple Cl, H₂SO₄, NO₃, H₂PO₄, Br ou I) ou organique (X est par exemple un carboxylate ou un sulfonate) est effectué selon le schéma réactionnel suivant, dans lequel le composés 4 représente une polyimine réticulée selon l'invention :

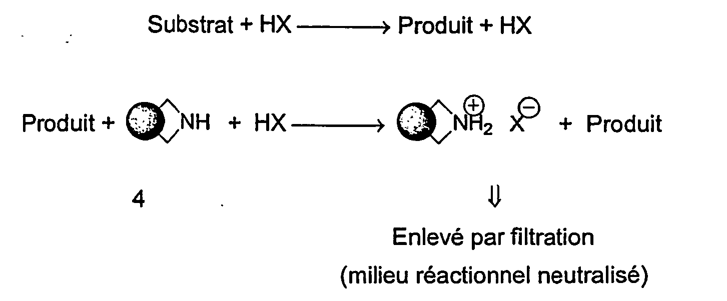

La polyimine étant amphiphile, elle peut être utilisée pour piéger les acides minéraux en phase aqueuse comme en phase organique. Ainsi, le milieu réactionnel contenant le produit souhaité se trouve neutralisé et débarrassé des sels de neutralisation par simple filtration. Ceci facilite l'isolation du produit désiré dans la mesure où l'on évite des étapes d'extraction à différents pH.

Le piégeage d'un composé électrophile est effectué selon le schéma réactionnel suivant :

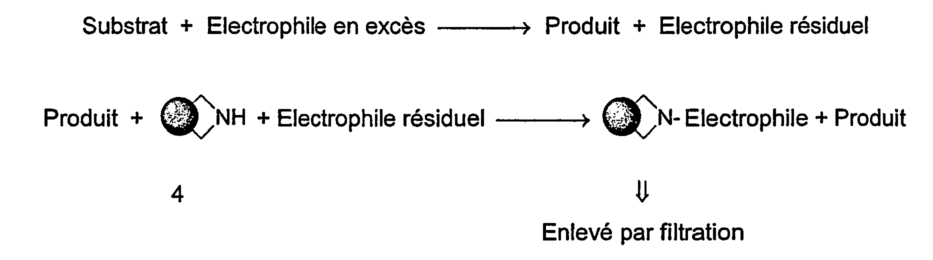

L'utilisation d'excès de réactif dans une réaction chimique permet d'obtenir de meilleurs taux de conversion, et par conséquent de meilleurs rendements en produit désiré. Cependant, la présence de réactif électrophile résiduel en fin de réaction gêne la purification. Une polyimine réticulée selon la présente invention réagit avec le composé électrophile en excès de la même façon qu'une amine secondaire en solution, et il se forme une liaison covalente entre les deux espèces. L'excès de composé électrophile est donc détruit et l'espèce polyimine-électrophile peut être enlevée du milieu réactionnel par simple filtration, ce qui simplifie les étapes d'isolation et de purification du produit souhaité.

Le procédé de l'invention peut en outre être utilisé pour la purification d'acides par attachement temporaire, selon le schéma réactionnel suivant :

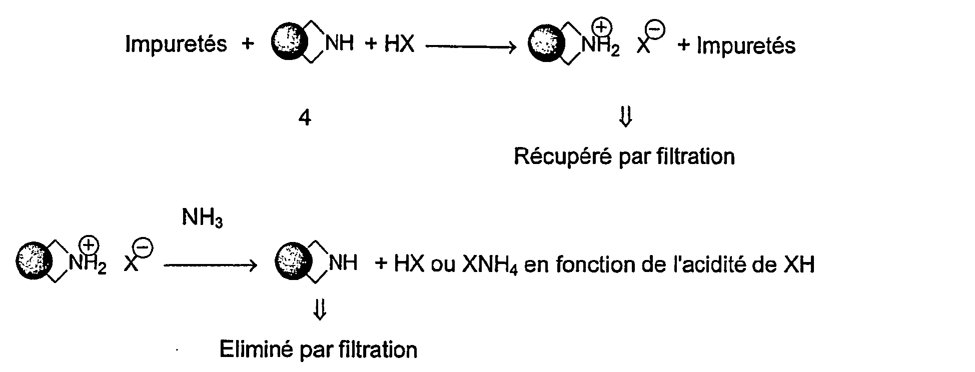

Toute espèce protique XH ayant un pKa du couple XH/X⁻ substantiellement plus bas (2 à 3 unités de pKa) que celui d'une amine secondaire pourra être liée temporairement à la polyimine afin de permettre sa purification par filtration. Un traitement subséquent avec un excès de base libèrera le produit souhaité. Si la base choisie est volatile (NH₃ par exemple), le produit pourra être récupéré à l'état pur après une simple évaporation, sous la forme XH ou XNH₄, en fonction de l'acidité de XH. Dans ce cas également, la fixation temporaire du produit souhaité sur la polyimine permet d'éviter des étapes fastidieuses d'extraction à différents pH.

La présente invention est décrite plus en détail par les exemples donnés ci-après, auxquels elle n'est cependant pas limitée.

### Exemple 1

### Synthèse de polyimine

On a préparé un mélange d'éthylènediamine (1)(2 mL, 0, 03 mol) , de tris(2-aminoéthyl)amine (3) (90 µL, 0, 6 mmol), de 1,4-bis-chlorométhylbenzène (2) (5,25 g, 0,03 mol), et de triéthylamine (12,5 mL, 0,09 mol) dans du toluène, puis on a porté ce mélange au reflux pendant une dizaine d'heure sous agitation. Après refroidissement, le polymère (4) formé a été récupéré par filtration, lavé successivement par une solution aqueuse de soude 1 M, par du méthanol, par de l'acétate d'éthyle et par de l'hexane, puis séchée sous vide. On a ainsi obtenu 4,4 g de polyimine sèche, correspondant à un rendement de 90%.

Le schéma réactionnel correspondant à l'obtention des unités récurrentes entre les noeuds de réticulation est indiqué ci-dessous :

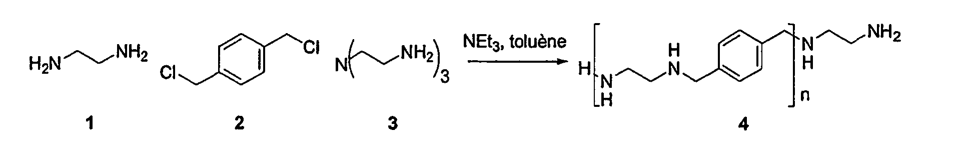

Le polymère obtenu a été soumis à une analyse infrarouge, en utilisant un broyat avec KBr. La position des raies sur le spectre IR en cm⁻¹, est comme suit : 3370 (N-H), 2930, 2810, 1610, 1509, 1458, 1364, 1087 (C-N), 822. La présence d'une bande d'absorption large à 3370 cm⁻¹ indique clairement que le produit analysé contient une proportion importante de groupes NH, due à l'étirement de la liaison N-H.

Le taux de gonflement (en mL/g) dans divers solvants est donné ci-après :

| Hexane | Dichlorométhane | THF | Methanol | DMF | eau |
|---|---|---|---|---|---|
| 3,0 | 4,8 | 4,2 | 5,6 | 4,4 | 5,0 |

Ces valeurs démontrent que la polyimine peut être considérée comme amphiphile. Elle pourra par conséquent être utilisée dans un plus grand nombre d'applications que les polymères polystyréniques commercialisés comme pour le piégeage de composés indésirables. En effet, les polymères polystyréniques sont parfaitement hydrophobes et ils ne gonflent ni dans l'eau, ni dans le méthanol (<2 mL/g de résine).

La réactivité des groupes NH a été déterminée en mettant la polyimine en contact avec le di-tert-butylpyrocarbonate (Boc₂O), qui est un réactif électrophile relativement encombré et faiblement réactif. La polyimine a été traitée avec un excès de Boc₂O. La réaction a été effectuée dans CDCl₃. La quantité de Boc₂O qui a pu être "absorbée" par la polyimine est déterminée par soustraction de la quantité restante en solution de la quantité initiale, les mesures étant effectuées par RMN du proton. Ce procédé donne une lecture directe de la charge efficace en amine de la polyimine. Ainsi, le calcul de la charge théorique attendue sur la base de la maille polymérique montre que l'on devrait avoir 12,3 mmol d'amines par gramme. La mesure de la charge efficace pour le piégeage de Boc₂O donne une valeur de 10,9 mmol de NH par gramme de résine, ce qui signifie que près de 90% des groupes NH sont accessibles même pour un électrophile peu réactif.

### Exemple 2

### Synthèse de polyimine

On a préparé un mélange d'heptane-1,7-diamine (1,3 g, 10 mmol), de tris(2-aminoéthyl)amine (30 µmol, 0,2 mmol), de 1,4-bis-chlorométhylbenzène (1,75 g, 10 mmol) et de diisopropyléthylamine (5,2 mL, 30 mmol) dans du DMF (5 mL), puis on a porté ce mélange à 80°C pendant 48 d'heure sous agitation. Après refroidissement, le polymère formé a été récupéré par filtration, lavé successivement par une solution aqueuse de soude 2 M, par de l'eau distillée, par du méthanol, par de l'acétate d'éthyle et par du dichlorométhane, puis séchée sous vide pendant une dizaine d'heures. On a ainsi obtenu 2 g de polyimine sèche, correspondant à un rendement de 85%.

Charge théorique = 8,7 mmol/g ; Charge efficace pour le piégeage de BOC₂O = 7,5 mmol/g.

IR (broyat avec KBr, en cm⁻¹) : 3325 (N-H stretch), 2930, 2830, 1595, 1458, 1364.

### Exemple 3

### Synthèse de polyimine

On a préparé un mélange de propane-1,3-diamine (0,83 mL, 10 mmol, de tris(2-aminoéthyl)amine (30 µmol, 0,2 mmol), de 1,4-bis-chlorométhylbenzène (1,75 g, 10 mmol) et de diisopropyléthylamine (5,2 mL, 30 mmol) dans du DMF (5 mL), puis on a porté ce mélange à 80°C pendant 48 d'heure sous agitation. Après refroidissement, le polymère formé a été récupéré par filtration, lavé successivement par une solution aqueuse de soude 2 M, par de l'eau distillée, par du méthanol, par de l'acétate d'éthyle et par du dichlorométhane, puis séchée sous vide pendant une dizaine d'heures. On a ainsi obtenu 1,6 g de polyimine sèche, correspondant à une rendement de 91%.

Charge théorique = 12,3 mmol/g ; Charge efficace pour le piégeage de Boc₂O = 11,5 mmol/g.

IR (broyat avec KBr, en cm⁻¹) : 3360 (N-H stretch), 2930, 2830, 1610, 1458, 1364.

### Exemple 4

### Piégeage d'acide sulfurique en phase aqueuse

On a ajouté une polyimine réticulée obtenue selon le mode opératoire de l'exemple 1 (64 mg, 0,64 mmol, ≈ 3 éq.) à une solution d'acide sulfurique (12,0 mg, 0.122 mmol) dans de l'eau distillée (0,5 mL, C = 0,24 M ≈ 0,5 N, pH = 0,3). La résine a bien gonflé, et après une heure, le pH de la solution était voisin de 6. La concentration en protons est donc de 10⁻⁶ N, ce qui signifie que le piégeage des ions H⁺ est quantitatif (> 99,9%).

### Exemple 5

### Piégeage de HCl en phase aqueuse

On a ajouté une polyimine réticulée préparée selon l'exemple 1 (52 mg, 0,52 mmol, ≈ 3 éq.) à une solution d'acide chlorhydrique (18 mg, 35%, 0,173 mmol) dans de l'eau distillée (0,5 mL, C = 0,345 M/N, pH = 0,46). La résine a bien gonflé, et après une heure, le pH de la solution était voisin de 6. La concentration en protons est donc de 10⁻⁶ N, ce qui signifie que là encore, le piégeage des ions H⁺ est quantitatif (> 99,9%).

### Exemple 6

### Piégeage d'acide para-toluènesulfonique (CH₂Cl₂)

Un mélange d'acide p-toluènesulfonique monohydraté (TsOH) (7,5 mg, 39,4 µmol) et de pentaméthylbenzène (6,6 mg, 44,5 µmol, étalon interne) en solution dans du dichlorométhane (300 µL) a été traité par 3 équivalents de polyimine préparée selon l'exemple 1 (12 mg, 120 µmol). Après filtration et évaporation, on a observé par RMN que le rapport TsOH/pentaméthylbenzène = 0,02. Il ne reste donc que 0,89 µmol de TsOH dans le milieu, soit seulement 2% de la quantité initiale.

### Exemple 7

### Piégeage d'acide para-toluènesulfonique (méthanol)

Un mélange de TsOH monohydraté (8,4 mg, 44,2 µmol) et de pentaméthylbenzène (6,8 mg, 45,85 µmol, étalon interne) en solution dans du CD₃OD (300 µL) a été traité par 3 équivalents de polyimine préparée selon l'exemple 1 (13,5 mg, 14 µmol). Après filtration, on a observé par RMN que le rapport TsOH/pentaméthylbenzène = 0,01. Il ne reste donc que 0,46 µmol de TsOH dans le milieu, soit seulement 1% de la quantité initiale.

### Exemple 8

### Piégeage d'un composé électrophile

De la dibenzylamine (96 µL, 0,5 mmol) en solution dans du CDCl₃ (2 mL) contenant un peu de diméthylaminopyridine (DMAP) comme catalyseur (6 mg, 0,05 mmol) a été traitée par un excès de Boc₂O (218 mg, 1 mmol) pour produire le carbamate (PhCH₂)₂N-Boc. Après 1 heure, on a ajouté une polyimine réticulée préparée selon l'exemple 1 (140 mg, 1,5 mmol NH, 3 équivalents par rapport à l'excès du composé électrophile Boc₂O). Le mélange réactionnel a été agité pendant une dizaine d'heures à température ambiante, puis la polyimine a été éliminée par filtration sur coton. Le spectre de RMN ¹H indique que l'excès de Boc₂O a bien été éliminé par ce traitement post-réactionnel.

## Revendications

1. Polyimine réticulée comprenant des segments linéaires constitués par des unités -HN-R¹-NH-R²-Ar-R³- dans lesquelles R¹, R² et R³ sont des groupes alkylène ou alkénylène identiques ou différents, et Ar représente un groupe aromatique.

2. Polyimine selon la revendication 1, **caractérisée en ce que** les groupes alkylène ou alkénylène ont de 1 à 10 atomes de carbone.

3. Polyimine selon la reendication 1, **caractérisé en ce que** Ar est un groupe ϕ ou ϕ-ϕ dans lesquels ϕ représente un phényle portant éventuellement un ou plusieurs substituants.

4. Polyimine selon la revendication 3, **caractérisée en ce que** les substituants du groupe phényle sont choisis parmi les groupes alkyle, aryle, alkyloxy, alcoxycarbonyle, halogène, ou NO₂.

5. Polyimine selon la revendication 1, **caractérisée en ce que** les noeuds de réticulation sont du type N(R⁴NH-R²-Ar-R³-)₃ ou C(R⁴NH-R²-Ar-R³-)₄₋ₙ(R⁴NH₂)ₙ dans lesquels R⁴ représente un groupe alkylène, et n est 0 ou 1.

6. Polyimine selon la revendication 5, **caractérisée en ce que** le groupe alkylène a de 1 à 10 atomes de carbone.

7. Polyimine selon la revendication 1, **caractérisée en ce qu'**elle a une charge en groupes NH de l'ordre de 11 mmol/g.

8. Procédé pour immobiliser des composés acides ou électrophiles présents dans un solvant, **caractérisé en ce qu'**il consiste à mettre en contact avec lesdits composés une polyimine réticulée selon l'une des revendications 1 à 7, insoluble dans ledit solvant, puis à séparer par filtration la polyimine modifiée obtenue.

9. Procédé selon la revendication 8, **caractérisé en ce que** la mise en contact est effectuée à la température ambiante.

10. Procédé selon la revendication 8, **caractérisé en ce que** la durée du contact est entre 1 heure et environ 10 heures.

11. Application du procédé selon la revendication 8, à l'élimination d'acides organiques ou d'acides minéraux présents dans un milieu réactionnel hydrophobe ou dans un milieu réactionnel hydrophile.

12. Application du procédé selon la revendication 8, à l'élimination de composés électrophiles présents dans un milieu réactionnel hydrophobe ou dans un milieu réactionnel hydrophile.

13. Application du procédé selon la revendication 8 à la purification d'acides organiques ou d'acides minéraux obtenus dans un milieu réactionnel hydrophobe ou dans un milieu réactionnel hydrophile, consistant à introduire la polyimine dans ledit milieu réactionnel, à extraire par filtration la polyimine modifiée, et à la traiter par une base.

## Claims

1. A crosslinked polyimine which comprises linear segments composed of -HN-R¹-NH-R²-Ar-R³- units in which R¹, R² and R³ are identical or different alkylene or alkenylene groups and Ar represents an aromatic group.

2. The polyimine as claimed in claim 1, **characterized in that** the alkylene or alkenylene groups have from 1 to 10 carbon atoms.

3. The polyimine as claimed in claim 1, **characterized in that** Ar is a ϕ or ϕ-ϕ group in which ϕ represents a phenyl optionally carrying one or more substituents.

4. The polyimine as claimed in claim 1, **characterized in that** the substituents of the phenyl group are chosen from alkyl, aryl, alkyloxy, alkoxycarbonyl, halogen or NO₂ groups.

5. The polyimine as claimed in claim 1, **characterized in that** the crosslinking nodes are of the N(R⁴NH-R²-Ar-R₃-)₃ or C(R⁴NH-R²-Ar-R³-)₄₋ₙ(R⁴NH₂)ₙ type in which R⁴ represents an alkylene group and n is 0 or 1.

6. The polyimine as claimed in claim 5, **characterized in that** the alkylene group has from 1 to 10 carbon atoms.

7. The polyimine as claimed in claim 1, **characterized in that** it has a content of NH groups of the order of 11 mmol/g.

8. A process for immobilizing acidic or electrophilic compounds present in a solvent, **characterized in that** it consists in bringing said compouds in contact with a crosslinked polyimine according to any of claims 1 to 7, which is insoluble in said solvent, and in separating, by filtration, the modified polyimine obtained.

9. The process as claimed in claim 8, **characterized in that** contacting is carried out at ambient temperature.

10. The process as claimed in claim 8, **characterized in that** the duration of the contact is between 1 hour and approximately 10 hours.

11. The application of the process as claimed in claim 8 in the removal of organic acids or inorganic acids present in a hydrophobic reaction medium or in a hydrophilic reaction medium.

12. The application of the process as claimed in claim 8 in the removal of electrophilic compounds present in a hydrophobic reaction medium or in a hydrophilic reaction medium.

13. The application of the process as claimed in claim 8 in the purification of organic acids or inorganic acids obtained in a hydrophobic reaction medium or in a hydrophilic reaction medium, consisting in introducing the polyimine into said reaction medium, in extracting the modified polyimine by filtration and in treating it with a base.

## Patentansprüche

1. Vernetztes Polyimin, umfassend lineare Segmente, die aus -HN-R¹-NH-R²-Ar-R³- Einheiten bestehen, worin R¹, R² und R³ gleiche oder unterschiedliche Alkylengruppen oder Alkenylengruppen sind und Ar für eine aromatische Gruppe steht.

2. Polyimin nach Anspruch 1, **dadurch gekennzeichnet, dass** die Alkylen- oder Alkenylengruppen 1 bis 10 Kohlenstoffatome aufweisen.

3. Polyimin nach Anspruch 1, **dadurch gekennzeichnet, dass** Ar eine ϕ- oder eine ϕ-ϕ-Gruppe ist, worin ϕ für ein Phenyl steht, das gegebenenfalls einen oder mehrere Substituenten aufweist.

4. Polyimin nach Anspruch 3, **dadurch gekennzeichnet, dass** die Substituenten der Phenylgruppe aus Alkyl-, Aryl-, Alkyloxy-, Alkoxycarbonyl-, Halogen- oder NO₂-Gruppen ausgewählt sind.

5. Polyimin nach Anspruch 1, **dadurch gekennzeichnet, dass** die Vernetzungsstellen vom Typ N(R⁴NH-R²-Ar-R³-)₃ oder C(R⁴NH-R²-Ar-R³-)₄₋ₙ(R⁴NH₂)ₙ sind, worin R⁴ für eine Alkylengruppe steht und n = 0 oder 1 ist.

6. Polyimin nach Anspruch 5, **dadurch gekennzeichnet, dass** die Alkylengruppe 1 bis 10 Kohlenstoffatome aufweist.

7. Polyimin nach Anspruch 1, **dadurch gekennzeichnet, dass** es eine Beladung mit NH-Gruppen in der Größenordnung von 11 mmol/g aufweist.

8. Verfahren zur Immobilisierung von in einem Lösungsmittel vorliegenden sauren oder elektrophilen Verbindungen, **dadurch gekennzeichnet, dass** das Verfahren darin besteht, die Verbindungen mit einem in dem Lösungsmittel unlöslichen vernetzten Polyimin nach einem der Ansprüche 1 bis 7 zu kontaktieren und anschließend das erhaltene modifizierte Polyimin abzufiltrieren.

9. Verfahren nach Anspruch 8, **dadurch gekennzeichnet, dass** das Kontaktieren bei Raumtemperatur durchgeführt wird.

10. Verfahren nach Anspruch 8, **dadurch gekennzeichnet, dass** die Dauer des Kontaktierens zwischen 1 h und etwa 10 h beträgt.

11. Verwendung eines Verfahrens nach Anspruch 8 zur Entfernung von in einem hydrophoben Reaktionsmedium oder in einem hydrophilen Reaktionsmedium vorliegenden organischen Säuren oder Mineralsäuren.

12. Verwendung eines Verfahrens nach Anspruch 8 zur Entfernung von in einem hydrophoben Reaktionsmedium oder in einem hydrophilen Reaktionsmedium vorliegenden elektrophilen Verbindungen.

13. Verwendung eines Verfahrens nach Anspruch 8 zur Reinigung von organischen Säuren oder Mineralsäuren, die in einem hydrophoben Reaktionsmedium oder in hydrophilen Reaktionsmedium erhalten wurden, wobei diese darin besteht, das Polyimin in das Reaktionsmedium einzuführen, das modifizierte Polyimin durch Filtration abzuziehen und es mit einer Base zu behandeln.
